# EUROPEAN PATENT APPLICATION

(11) **EP 2 256 537 A1**
(43) Date of publication of application: **01.12.2010**
(21) Application number: 10176512.1
(22) Date of filing: 14.09.2005
(51) Int. Cl.: G02B 26/00, G02F 1/21

(54) **Display device having an array of spatial light modulators with integrated color filters**

(30) Priority: 27.09.2004 US 613491 P; 27.09.2004 US 613542 P; 28.10.2004 US 623072 P; 04.02.2005 US 51258
(62) Divisional of application: 05255657.8
(71) Applicant: Qualcomm Mems Technologies, Inc., San Diego, CA 92121 (US)
(72) Inventor: Cummings, William J., Millbrae, CA 94030 (US)
(74) Representative: Dunlop, Hugh Christopher

(57) **Abstract**

By selectively placing color filters with different transmittance spectrums on an array of modulator elements each having the same reflectance spectrum, a resultant reflectance spectrum for each modulator element and it's respective color filter is created. In one embodiment, the modulator elements in an array are manufactured by the same process so that each modulator element has a reflectance spectrum that includes multiple reflectivity lines. Color filters corresponding to multiple colors, such as red, green, and blue, for example, may be selectively associated with these modulator elements in order to filter out a desired wavelength range for each modulator element and provide a multiple color array. Because the modulator elements are manufactured by the same process, each of the modulator elements is substantially the same and common voltage levels may be used to activate and deactivate selected modulation.

## Description

### Background

### Field of the Invention

The field of the invention relates to microelectromechanical systems (MEMS), and, more particularly to interferometric modulators.

### Description of the Related Technology

Microelectromechanical systems (MEMS) include micro mechanical elements, actuators, and electronics. Micromechanical elements may be created using deposition, etching, and or other micromachining processes that etch away parts of substrates and/or deposited material layers or that add layers to form electrical and electromechanical devices. One type of MEMS device is called an interferometric modulator. An interferometric modulator may comprise a pair of conductive plates, one or both of which may be transparent and/or reflective in whole or part and capable of relative motion upon application of an appropriate electrical signal. One plate may comprise a stationary layer deposited on a substrate, the other plate may comprise a metallic membrane separated from the stationary layer by an air gap. Such devices have a wide range of applications, and it would be beneficial in the art to utilize and/or modify the characteristics of these types of devices so that their features can be exploited in improving existing products and creating new products that have not yet been developed.

### Summary of Certain Embodiments

The system, method, and devices of the invention each have several aspects, no single one of which is solely responsible for its desirable attributes. Without limiting the scope of this invention, its more prominent features will now be discussed briefly. After considering this discussion, and particularly after reading the section entitled "Detailed Description of Certain Embodiments" one will understand how the features of this invention provide advantages over other display devices.

Certain embodiments of the invention provide a display device comprising an array of spatial light modulators. Each spatial light modulator is individually addressable so as to be switched between a first state in which the modulator is substantially reflective to at least one wavelength of light and a second state in which the modulator is substantially non-reflective to the at least one wavelength of light. The display device further comprises an array of color filters. Each color filter is positioned such that light reflected from a corresponding spatial light modulator propagates through the color filter. Each color filter substantially transmits the at least one wavelength of a corresponding spatial light modulator.

In certain embodiments, the spatial light modulator comprises an interferometric modulator which comprises a fixed surface and a movable surface substantially parallel to the fixed surface. In the first state, the movable surface is spaced a first distance from the fixed surface in a direction substantially perpendicular to the fixed surface. In the second state, the moveable surface is spaced a second distance, different from the first distance, from the fixed surface in a direction substantially perpendicular to the fixed surface. In certain embodiments, either the first distance or the second distance is approximately zero. In certain embodiments, the first distance for each of the spatial light modulators is approximately the same. In certain embodiments, the second distance for each of the spatial light modulators is approximately the same. In certain embodiments, the array of spatial light modulators comprises two or more subsets of spatial light modulators, with the modulators of each subset each having the same first distance and the same second distance.

In certain embodiments, the at least one wavelength of a spatial light modulator comprises a broadband wavelength region (e.g., white light). In certain embodiments, the at least one wavelength of a spatial light modulator comprises a narrowband wavelength region comprising two or more colors. In certain embodiments, the at least one wavelength of a spatial light modulator comprises a single color of light (e.g., red, green, or blue light). In certain embodiments, the at least one wavelength comprises first-order light, while in other embodiments, the at least one wavelength comprises second-, third-, fourth-, or fifth-order light.

One embodiment comprises a device comprising: a plurality of display elements, each of the display elements comprising a fixed surface and a moveable surface configured so as to define a cavity therebetween that is sufficiently large so that light reflected from each of the display elements has a wavelength spectrum including multiple lines; and a color filter associated with at least one of the display elements, wherein the color filter is configured to allow a range of wavelengths to pass through the color filter, the display region being configured so that a user views the light that passes through the color filter.

Another embodiment comprises an interferometric modulator configured to output multiple lines in a range of wavelengths that are visible to a human eye, the modulator comprising: a partially reflective surface; a reflective surface located with respect to the partially reflective surface such that a gap therebetween is sufficiently large so that light output from the interferometric modulator has a spectrum including multiple lines; and a filter configured to transmit wavelengths of light that are only within a desired range of wavelengths, wherein the filter is disposed so as to receive light reflected from at least one of the surfaces such that the received light is transmitted through the filter toward a viewer.

Another embodiment comprises a method of manufacturing a device comprising: fabricating an array of display elements, each of the display elements comprising a fixed surface and a moveable surface so as to define a cavity therebetween that is sufficiently large so that light reflected from each of the display elements has a reflectivity spectrum including multiple lines; fabricating a color filter that is configured to allow a range of wavelengths to pass through the color filter; and coupling the color filter to at least one of the display elements so that a user views the light that passes through the color filter.

Another embodiment comprises a device comprising: a partially reflective surface; a reflective surface; a dielectric layer disposed between the partially reflective and reflective surfaces; and a gap defined between the partially reflective surface and the reflective surface, wherein a gap distance is the distance between the partially reflective surface and the reflective surface; wherein a thickness of the dielectric layer is sufficiently small such that when the modulator is in a closed state, interference of a large range of wavelengths of visible light is frustrated so that the modulator reflects visible light, and wherein when the modulator is in an open state, the gap distance is sufficiently large to cause destructive interference such that the modulator substantially inhibits reflection of visible light.

Another embodiment comprises a method of manufacturing an interferometric modulator, the method comprising: fabricating a partially reflective surface; fabricating a reflective surface, wherein a gap distance is defined as a distance between the partially reflective surface and the reflective surface; positioning a dielectric layer between the partially reflective and reflective surfaces, wherein a thickness of the dielectric layer is sufficiently small such that when the modulator is in a closed state interference of a large range of wavelengths of visible light is frustrated so that the modulator reflects visible light, and wherein when the modulator is in an open state the gap distance is sufficiently large to cause destructive interference, such that the modulator substantially inhibits reflection of visible light.

Another embodiment comprises a device comprising: an array of interferometric modulators each comprising a partially reflective surface comprising a transparent conductor layer and a partially reflective layer; a reflective surface; a dielectric layer disposed between the partially reflective and reflective surfaces; and a gap defined between the partially reflective surface and the reflective surface, wherein a size of the gap is selected so that each interferometric modulator has a reflectance spectrum that includes a reflectivity line centered around first order green and extending to cover at least a portion of first order blue and first order red; and at least one color filter disposed so as to receive light reflected from the reflective surface such that the received light is transmitted through the filter toward a viewer.

Another embodiment comprises a method of manufacturing a device, the method comprising: fabricating an array of interferometric modulators each comprising a partially reflective surface, a reflective surface, a dielectric layer disposed between the partially reflective and reflective surfaces, and a gap defined between the partially reflective surface and the reflective surface, wherein a size of the gap is selected so that each interferometric modulator has a reflectance spectrum that includes a reflectivity line centered around first order green and extending to cover at least a portion of first order blue and first order red; and fabricating at least one color filter so that the color filter transmits light within a range of wavelengths selected to include at least one of the following: red wavelengths, green wavelengths, and blue wavelengths; and positioning the color filter so as to receive light reflected from the reflective surface such that the received light is transmitted through the filter toward a viewer.

Another embodiment comprises a device comprising: a reflective surface; a partially reflective surface; a dielectric layer disposed between the partially reflective and reflective surfaces, wherein a thickness of the dielectric layer is sufficiently large to cause reflectivity lines at around first order red and second order blue wavelengths of visible light when the device is in an actuated state.

Another embodiment comprises an interferometric modulator comprising: a reflective surface; a partially reflective surface, said reflecting surface and said partially reflecting surface movable with respect to each other to provide an open state and a closed state for said interferometric modulator; and a dielectric layer disposed between the partially reflective and reflective surfaces, the thickness of the dielectric layer is sufficiently large to cause reflectivity lines at about 370 nanometers and about 730 nanometers when the modulator is in the closed state.

Another embodiment comprises an interferometric modulator comprising: means for partially reflecting light; means for reflecting light, wherein the means for partially reflecting light and the means for reflecting light are configured so as to provide a reflectivity spectrum including multiple lines; and means for filtering only a desired one of the multiple lines for viewing by a human eye.

Another embodiment comprises a device comprising: means for modulating light configured such that light reflected from said modulating means has a wavelength spectrum including multiple lines; and means for filtering only a desired one of the multiple lines for viewing by a human eye.

Another embodiment comprises a device comprising: means for interferometrically modulating light wherein in a first state, interference of a large range of wavelengths of visible light is frustrated so that visible light is reflected, and wherein in a second state, destructive interference substantially inhibits reflection of visible light; and means for switching said modulating means between said first and second states.

Another embodiment comprises a device comprising: means for modulating light, said modulating means having a reflectance spectrum that includes a reflectivity line centered around first order green and extending to cover at least a portion of first order blue and first order red; and means for color filtering disposed so as to receive light from said modulating means.

Another embodiment comprises a device comprising: means for modulating light, said modulating means having first and second states, wherein in said second state light is reflected that has spectral lines at around first order red and second order blue wavelengths of visible light; and means for switching said modulating means between said first and second states.

Another embodiment comprises a method of operating a display comprising: providing an array of display elements, each of the display elements comprising a fixed surface and a moveable surface configured to define a cavity therebetween that is sufficiently large so that light reflected from each of the display elements has a reflectivity spectrum including multiple lines; receiving a light on the array of display elements; and filtering light reflected from each of the display elements according to a color filter disposed in an optical path of respective display elements.

Another embodiment comprises a method of operating a display, the method comprising: receiving light from a light source so that the light at least partially passes through a partially reflective surface and reflects from a reflective surface, wherein a optical cavity is formed between the partially reflective surface and the reflective surface; setting a distance between the partially reflective surface and the reflective surface so that interference of a large range of wavelengths of visible light is frustrated and visible light is reflected from the display; and resetting the distance between the partially reflective surface and the reflective surface so that light within the cavity undergoes destructive interference and substantially inhibits reflection of visible light from the display.

Another embodiment comprises a method of operating a display comprising: reflecting light from a display comprising a switchable optical resonant cavity so that the wavelength spectrum of the reflected light includes a spectral line centered around first order green and that extends to cover at least a portion of first order blue and first order red; and filtering the reflected light so as to selectively alter wavelengths of light emitted from portions of the display.

Another embodiment comprises a method of operating a display device comprising a plurality of resonant optical cavities, said method comprising: setting at least one of said optical cavities to a state such that light reflected from the optical cavity has spectral lines at around first order red and second order blue wavelengths of visible light; and switching the at least one optical cavity such that the at least one optical cavities has a different optical cavity length and a different reflectivity spectrum.

Other embodiments are possible. For example, in other embodiments, other types of light-modulating elements other than interferometric modulators (e.g., other types of MEMS or non-MEMs, reflective or non-reflective structures) may be used.

### Brief Description of the Drawings

Figure 1 is an isometric view depicting a portion of one embodiment of an interferometric modulator display in which a movable reflective layer of a first interferometric modulator is in a released position and a movable reflective layer of a second interferometric modulator is in an actuated position.
Figure 2 is a system block diagram illustrating one embodiment of an electronic device incorporating a 3x3 interferometric modulator display.
Figure 3 is a diagram of movable mirror position versus applied voltage for one exemplary embodiment of an interferometric modulator of Figure 1.
Figure 4 is an illustration of a set of row and column voltages that may be used to drive an interferometric modulator display.
Figure 5A illustrates one exemplary frame of display data in the 3x3 interferometric modulator display of Figure 2.
Figure 5B illustrates one exemplary timing diagram for row and column signals that may be used to write the frame of Figure 5A.
Figure 6A is a cross section of the device of Figure 1.
Figure 6B is a cross section of an alternative embodiment of an interferometric modulator.
Figure 6C is a cross section of another alternative embodiment of an interferometric modulator.
Figure 7 schematically illustrates an interferometric modulator array having three sets of modulator elements, each set having a corresponding gap distance.
Figure 8 schematically illustrates one embodiment of an interferometric modulator array in which substantially all of the modulator elements have substantially equal gap distances.
Figure 9 is a graph of an exemplary reflectance spectrum from an interferometric modulator element having a gap distance d₀ approximately equal to one micron.
Figures 10A-10D are graphs of various reflectance spectra from interferometric modulator elements compatible with embodiments described herein.
Figures 11A and 11B schematically illustrate exemplary embodiments of a display device comprising an array of interferometric modulator elements and an array of color filters.
Figure 12 is a graph of transmittance spectra for a set of three exemplary color filter materials compatible with embodiments described herein.
Figures 13A-13D are graphs of the resultant reflectance spectra resulting from the combination of a color filter with the interferometric modulator elements corresponding to Figures 10A-10D.
Figure 14 schematically illustrates an interferometric modulator element having a dielectric layer compatible with embodiments described herein.
Figure 15 schematically illustrates another embodiment of a display device with an array of interferometric modulator elements compatible with embodiments described herein.
Figures 16A and 16B are system block diagrams illustrating an embodiment of a visual display device comprising a plurality of interferometric modulators.

### Detailed Description of Certain Embodiments

By selectively placing color filters with different transmittance spectrums on an array of modulator elements each having the same reflectance spectrum, a resultant reflectance spectrum for each modulator element and it's respective color filter is created. In one embodiment, the modulator elements in an array are manufactured by the same process so that each modulator element has a reflectance spectrum that includes multiple reflectivity lines. Color filters corresponding to multiple colors, such as red, green, and blue, for example, may be selectively associated with these modulator elements in order to filter out a desired wavelength range for each modulator element and provide a multiple color array. Because the modulator elements are manufactured by the same process, each of the modulator elements is substantially the same and common voltage levels may be used to activate and deactivate selected modulation.

The following detailed description is directed to certain specific embodiments of the invention. However, the invention can be embodied in a multitude of different ways. In this description, reference is made to the drawings wherein like parts are designated with like numerals throughout. As will be apparent from the following description, the invention may be implemented in any device that is configured to display an image, whether in motion (e.g., video) or stationary (e.g., still image), and whether textual or pictorial. More particularly, it is contemplated that the invention may be implemented in or associated with a variety of electronic devices such as, but not limited to, mobile telephones, wireless devices, personal data assistants (PDAs), hand-held or portable computers, GPS receivers/navigators, cameras, MP3 players, camcorders, game consoles, wrist watches, clocks, calculators, television monitors, flat panel displays, computer monitors, auto displays (e.g., odometer display, etc.), cockpit controls and/or displays, display of camera views (e.g., display of a rear view camera in a vehicle), electronic photographs, electronic billboards or signs, projectors, architectural structures, packaging, and aesthetic structures (e.g., display of images on a piece of jewelry). MEMS devices of similar structure to those described herein can also be used in non-display applications such as in electronic switching devices.

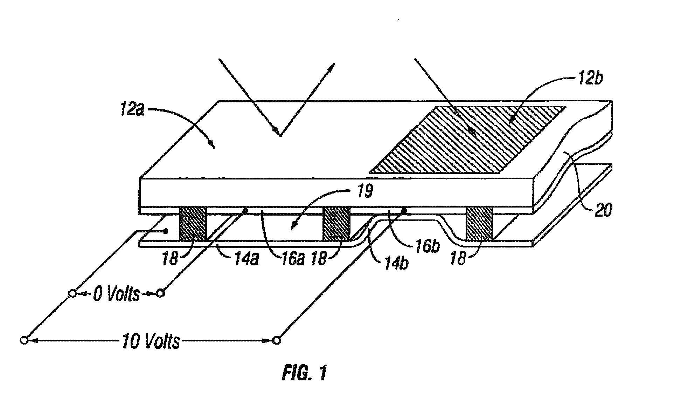

One interferometric modulator display embodiment comprising an interferometric MEMS display element is illustrated in Figure 1. In these devices, the pixels are in either a bright or dark state. In the bright ("on" or "open") state, the display element reflects a large portion of incident visible light to a user. When in the dark ("off" or "closed") state, the display element reflects little incident visible light to the user. Depending on the embodiment, the light reflectance properties of the "on" and "off" states may be reversed. MEMS pixels can be configured to reflect predominantly at selected colors, allowing for a color display in addition to black and white.

Figure 1 is an isometric view depicting two adjacent pixels in a series of pixels of a visual display, wherein each pixel comprises a MEMS interferometric modulator. In some embodiments, an interferometric modulator display comprises a row/column array of these interferometric modulators. Each interferometric modulator includes a pair of reflective layers positioned at a variable and controllable distance from each other to form a resonant optical cavity with at least one variable dimension. In one embodiment, one of the reflective layers may be moved between two positions. In the first position, referred to herein as the released state, the movable layer is positioned at a relatively large distance from a fixed partially reflective layer. In the second position, the movable layer is positioned more closely adjacent to the partially reflective layer. Incident light that reflects from the two layers interferes constructively or destructively depending on the position of the movable reflective layer, producing either an overall reflective or non-reflective state for each pixel.

The depicted portion of the pixel array in Figure 1 includes two adjacent interferometric modulators 12a and t2b. In the interferometric modulator 12a on the left, a movable and highly reflective layer 13A is illustrated in a released position at a predetermined distance from a fixed partially reflective layer 16a. In the interferometric modulator 12b on the right, the movable highly reflective layer 14b is illustrated in an actuated position adjacent to the fixed partially reflective layer 16b.

The fixed layers 16a, 16b are electrically conductive, partially transparent and partially reflective, and may be fabricated, for example, by depositing one or more layers each of chromium and indium-tin-oxide onto a transparent substrate 20. The layers are patterned into parallel strips, and may form row electrodes in a display device as described further below. The movable layers 13A, 14b may be formed as a series of parallel strips of a deposited metal layer or layers (orthogonal to the row electrodes 16a, 16b) deposited on top of posts 18 and an intervening sacrificial material deposited between the posts 18. When the sacrificial material is etched away, the deformable metal layers are separated from the fixed metal layers by a defined air gap 19. A highly conductive and reflective material such as aluminum may be used for the deformable layers, and these strips may form column electrodes in a display device.

With no applied voltage, the cavity 19 remains between the layers 13A, 16a and the deformable layer is in a mechanically relaxed state as illustrated by the pixel 12a in Figure 1. However, when a potential difference is applied to a selected row and column, the capacitor formed at the intersection of the row and column electrodes at the corresponding pixel becomes charged, and electrostatic forces pull the electrodes together. If the voltage is high enough, the movable layer is deformed and is forced against the fixed layer (a dielectric material which is not illustrated in this Figure may be deposited on the fixed layer to prevent shorting and control the separation distance) as illustrated by the pixel 12b on the right in Figure 1. The behavior is the same regardless of the polarity of the applied potential difference. In this way, row/column actuation that can control the reflective vs. non-reflective pixel states is analogous in many ways to that used in conventional LCD and other display technologies.

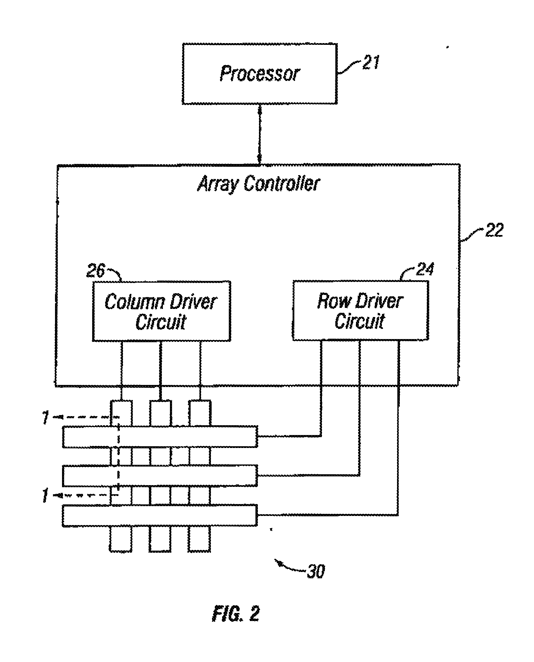

Figures 2 through 5B illustrate one exemplary process and system for using an array of interferometric modulators in a display application. Figure 2 is a system block diagram illustrating one embodiment of an electronic device that may incorporate aspects of the invention. In the exemplary embodiment, the electronic device includes a processor 21 which may be any general purpose single- or multi-chip microprocessor such as an ARM, Pentium^{®}, Pentium II^{®}, Pentium III^{®}, Pentium IV^{®}, Pentium^{®} Pro, an 8051, a MIPS^{®}, a Power PC^{®}, an ALPHA^{®}, or any special purpose microprocessor such as a digital signal processor, microcontroller, or a programmable gate array. As is conventional in the art, the processor 21 may be configured to execute one or more software modules. In addition to executing an operating system, the processor may be configured to execute one or more software applications, including a web browser, a telephone application, an email program, or any other software application.

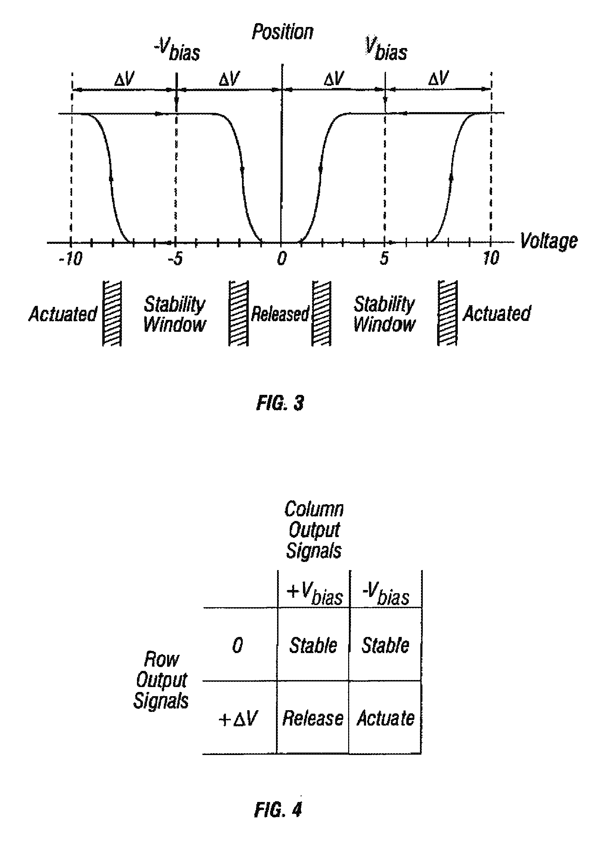

In one embodiment, the processor 21 is also configured to communicate with an array controller 22. In one embodiment, the array controller 22 includes a row driver circuit 24 and a column driver circuit 26 that provide signals to a pixel array 30. The cross section of the array illustrated in Figure 1 is shown by the lines 1-1 in Figure 2. For MEMS interferometric modulators, the row/column actuation protocol may take advantage of a hysteresis property of these devices illustrated in Figure 3. It may require, for example, a 10 volt potential difference to cause a movable layer to deform from the released state to the actuated state. However, when the voltage is reduced from that value, the movable layer maintains its state as the voltage drops back below 10 volts. In the exemplary embodiment of Figure 3, the movable layer does not release completely until the voltage drops below 2 volts. There is thus a range of voltage, about 3 to 7 V in the example illustrated in Figure 3. where there exists a window of applied voltage within which the device is stable in either the released or actuated state. This is referred to herein as the "hysteresis window" or "stability window." For a display array having the hysteresis characteristics of Figure 3, the row/column actuation protocol can be designed such that during row strobing, pixels in the strobed row that are to be actuated are exposed to a voltage difference of about 10 volts, and pixels that are to be released are exposed to a voltage difference of close to zero volts. After the strobe, the pixels are exposed to a steady state voltage difference of about 5 volts such that they remain in whatever state the row strobe put them in. After being written, each pixel sees a potential difference within the "stability window" of 3-7 volts in this example. This feature makes the pixel design illustrated in Figure 1 stable under the same applied voltage conditions in either an actuated or released pre-existing state. Since each pixel of the interferometric modulator, whether in the actuated or released state, is essentially a capacitor formed by the fixed and moving reflective layers, this stable state can be held at a voltage within the hysteresis window with almost no power dissipation. Essentially no current flows into the pixel if the applied potential is fixed.

In typical applications, a display frame may be created by asserting the set of column electrodes in accordance with the desired set of actuated pixels in the first row. A row pulse is then applied to the row 1 electrode, actuating the pixels corresponding to the asserted column lines. The asserted set of column electrodes is then changed to correspond to the desired set of actuated pixels in the second row. A pulse is then applied to the row 2 electrode, actuating the appropriate pixels in row 2 in accordance with the asserted column electrodes. The raw I pixels are unaffected by the row 2 pulse, and remain in the state they were set to during the row 1 pulse. This may be repeated for the entire series of rows in a sequential fashion to produce the frame. Generally, the frames are refreshed and/or updated with new display data by continually repeating this process at some desired number of frames per second. A wide variety of protocols for driving row and column electrodes of pixel arrays to produce display frames are also well known and may be used in conjunction with the present invention.

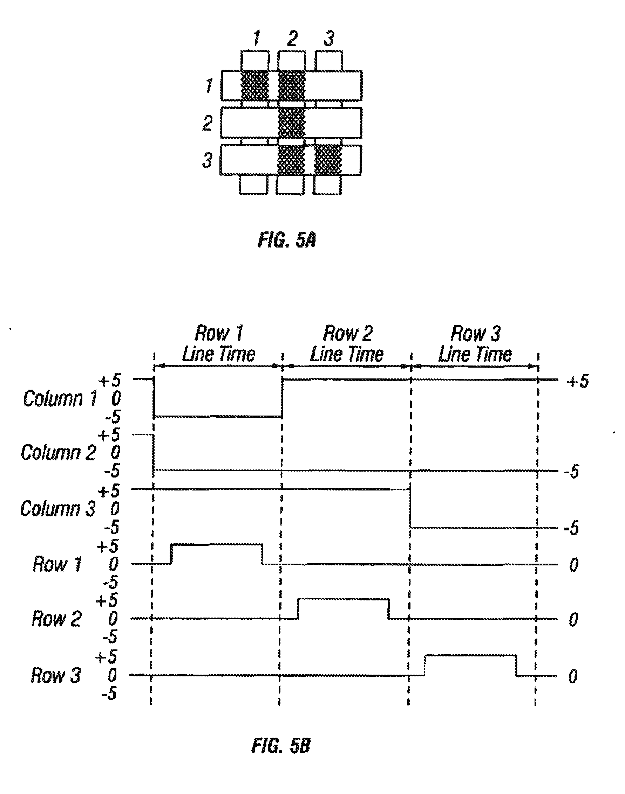

Figures 4, 5A and 5B illustrate one possible actuation protocol for creating a display frame on the 3x3 array of Figure 2. Figure 4 illustrates a possible set of column and row voltage levels that may be used for pixels exhibiting the hysteresis curves of Figure 3. In the Figure 4 embodiment, actuating a pixel involves setting the appropriate column to -v_{bias}, and the appropriate row to +ΔV, which may correspond to -5 volts and +5 volts respectively Releasing the pixel is accomplished by setting the appropriate column to +V_{bias}, and the appropriate row to the same +AV, producing a zero volt potential difference across the pixel. In those rows where the row voltage is held at zero volts, the pixels are stable in whatever state they were originally in, regardless of whether the column is at +V_{bias}, or -V_{bias}.

Figure 5B is a timing diagram showing a series of row and column signals applied to the 3x3 array of Figure 2 which will result in the display arrangement illustrated in Figure 5A, where actuated pixels are non-reflective. Prior to writing the frame illustrated in Figure 5A, the pixels can be in any state, and in this example, all the rows are at 0 volts, and all the columns are at +5 volts. With these applied voltages, all pixels are stable in their existing actuated or released states.

In the Figure 5A frame, pixels (1,1), (1,2), (2,2), (3,2) and (3,3) are actuated. To accomplish this, during a "line time" for row 1, columns 1 and 2 are set to -5 volts, and column 3 is set to +5 volts. This does not change the state of any pixels, because all the pixels remain in the 3-7 volt stability window. Row I is then strobed with a pulse that goes from 0, up to 5 volts, and back to zero. This actuates the (1,1) and (1,2) pixels and releases the (1,3) pixel. No other pixels in the array are affected. To set row 2 as desired, column 2 is set to -5 volts, and columns 1 and 3 are set to +5 volts. The same strobe applied to row 2 will then actuate pixel (2,2) and release pixels (2,1) and (2,3). Again, no other pixels of the array are affected. Row 3 is similarly set by setting columns 2 and 3 to -5 volts, and column 1 to +5 volts. The row 3 strobe sets the row 3 pixels as shown in Figure 5A. After writing the frame, the row potentials are zero, and the column potentials can remain at either +5 or -5 volts, and the display is then stable in the arrangement of Figure 5A. It will be appreciated that the same procedure can be employed for arrays of dozens or hundreds of rows and columns. It will also be appreciated that the timing, sequence, and levels of voltages used to perform row and column actuation can be varied widely within the general principles outlined above, and the above example is exemplary only, and any actuation voltage method can be used with the present invention.

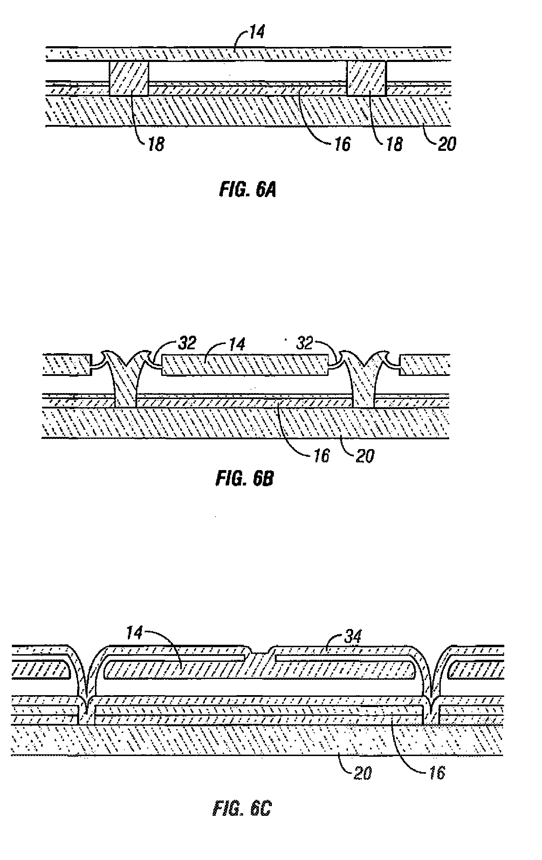

The details of the structure of interferometric modulators that operate in accordance with the principles set forth above may vary widely. For example, Figures 6A-6C illustrate three different embodiments of the moving mirror structure. Figure 6A is a cross section of the embodiment of Figure 1, where a strip of metal material 14 is deposited on orthogonally extending supports 18. In Figure 6B, the moveable reflective material 14 is attached to supports at the corners only, on tethers 32. In Figure 6C, the moveable reflective material 14 is suspended from a deformable layer 34. This embodiment has benefits because the structural design and materials used for the reflective material 14 can be optimized with respect to the optical properties, and the structural design and materials used for the deformable layer 34 can be optimized with respect to desired mechanical properties. The production of various types of interferometric devices is described in a variety of published documents, including, for example, U.S. Published Application 2004/0051929. A wide variety of well known techniques may be used to produce the above described structures involving a series of material deposition, patterning, and etching steps.

Exemplary spatial light modulator arrays provide the capability to individually address and switch selected modulator elements between at least two states with different reflection and transmission properties. In certain embodiments, each spatial light modulator of the array can be optimized to switch at least one corresponding wavelength from a reflective "on" state to a non-reflective "off" state. The modulators of such an array can be used in pixels of an electronic display device, either black-and-white or color.

In one embodiment, an interferometric modulator comprises a fixed surface and a moveable surface substantially parallel to the fixed surface. In the reflective "on" state, the movable surface is spaced a first distance from the fixed surface in a direction substantially perpendicular to the fixed surfaces. In the non-reflective "off" state, the moveable surface is spaced a second distance, different from the first distance, from the fixed surface in a direction substantially perpendicular to the fixed surface.

In one embodiment, the reflective "on" state of a black-and-white display reflects a plurality of wavelengths which sum to produce visible white light, and the "off" state is substantially non-reflective for the plurality of wavelengths. For color displays, the reflective "on" state for each modulator is reflective of one or more wavelengths corresponding to a particular corresponding color (e.g., red, green, and blue).

In one embodiment, the color reflected by a modulator element in the actuated state is mainly determined by the optical path length of the dielectric layer, which is approximately the thickness of the dielectric layer times the index of refraction of the dielectric material. In general, the thickness required for both the dielectric layer and the air gap to obtain the desired colors depends on the materials used in the fixed and movable layers. Thus, the thicknesses of the dielectric layer and air gap discussed herein with respect to certain embodiments are exemplary. These thicknesses may vary depending on particular materials chosen for the dielectric and other characteristics of the particular modulator elements. Accordingly, when different dielectric materials are used in modulator elements, the optical path distance may change and the colors reflected by the modulator elements may also change. In one embodiment, the fixed layer of a modulator element comprises an Indium Tin Oxide transparent conductor layer, a Cr partially reflective layer, an Al reflective layer, and a dielectric stack comprising primarily SiO2.

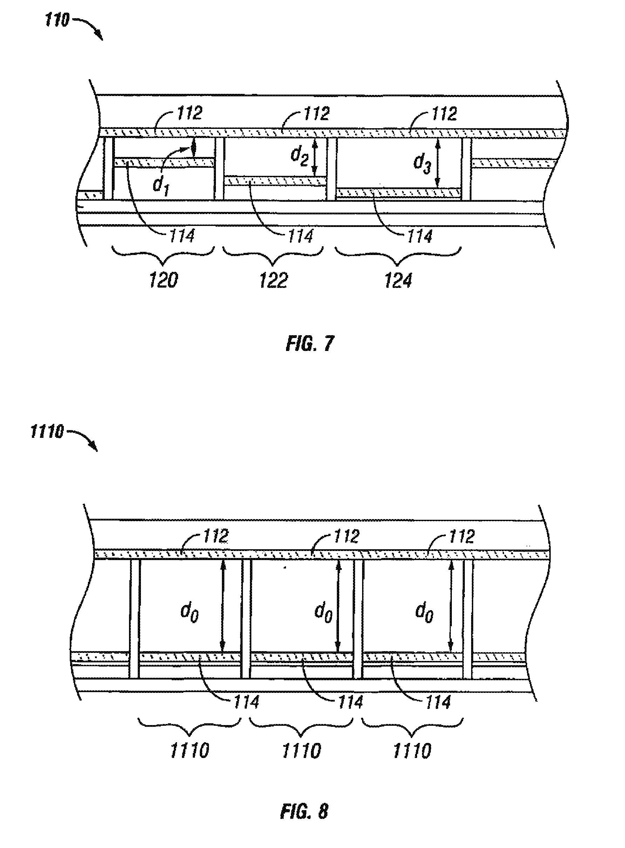

For certain embodiments of the interferometric modulator arrays, a color display is produced using three sets of modulator elements, each set having a different gap distance so as to switch a corresponding color. For example, as schematically illustrated by Figure 7, an interferometric modulator array 110 for use in a color display comprises a plurality of modulator elements, where each modulator element comprises a fixed surface 112 and a moveable surface 114. Between the fixed surface 112 and the movable surface 114 a gap is defined, wherein a gap distance is the distance between the fixed surface 112 and the movable surface 114. The interferometric modulator array 110 further comprises a planarization layer 116 which provides a planar surface for subsequent processing of the interferometric modulator array 110.

In the embodiment of Figure 7, the modulator array comprises three modulator element 120,122,124. Each of these modulator elements 120,122,124 may be configured to reflect a different color so that the combination of the three modulator elements 120,122,124 provides three colors. For example, the modulator element 120 may be configured to reflect only a first color, the modulator element 122 may be configured to reflect only a second color, and the modulator element 124 may be configured to reflect only a third color. In certain embodiments, the first, second, and third colors are red, green, and blue, while in other embodiments, the first, second, and third colors are cyan, magenta, and yellow.

In the embodiment of Figure 7, the first gap distance d₁ is set so that the first modulator element 120 is substantially reflective to a first color (e.g., red), and non-reflective to a second and third color. For the second modulator element 122, the distance between the movable surface 114 and the fixed surface 112 is selectively switched between a second gap distance d₂ and approximately zero. In the embodiment of Figure 7, the second gap distance d₂ is set so that the second modulator element 122 is substantially reflective to a second color (e.g., green), and non-reflective to a first and third color. For the third modulator element 124, the distance between the movable surface 114 and the fixed surface 112 is selectively switched between a third gap distance d₃ and approximately zero. In the embodiment of Figure 7, the third gap distance d₃ is set so that the third modulator element 124 is substantially reflective to a third color (e.g., blue), and non-refleclive to a first and second color.

As may be appreciated by those of skill in the art, fabrication of a multi-color modulator array, such as array 110, for example, typically involves use of three masks to pattern the sacrificial layers to produce the three different gap distances (corresponding to the three colors, e.g., red, green, and blue) between the fixed surface 112 and the movable surface 114 of the three modulator elements 120, 122, 124. In addition, building the mechanical structure of the modulator elements with an uneven back structure increases the chances of misalignment and tilt of the modulator elements. In addition to the complexity of fabricating modulator elements with three different gap distances, production of a deeply saturated color gamut (i.e., the set of possible colors within a color system) may be difficult. For example, a modulator element having a gap distance set to reflect red wavelengths of light may be fabricated using additional masking steps that increase the depth of color reflected by the modulator element. Thus, in some embodiments, the fabrication process includes production of a multi-color array of modulator elements with different gap distances and requires additional steps to enhance the color gamut of the array.

Figure 8 schematically illustrates one embodiment of an interferometric modulator array 1100 in which substantially all of the modulator elements 1110 have substantially the same gap distance d₀. The gap distance d₀ is selected to provide substantial reflectance by the modulator element 1110 to a selected range of wavelengths in the visible light portion of the spectrum. For example, in certain embodiments, the gap distance d₀ is approximately equal to one micron. The gap distance d₀ has been selected so as to produce a reflectance spectrum that includes multiple peaks.

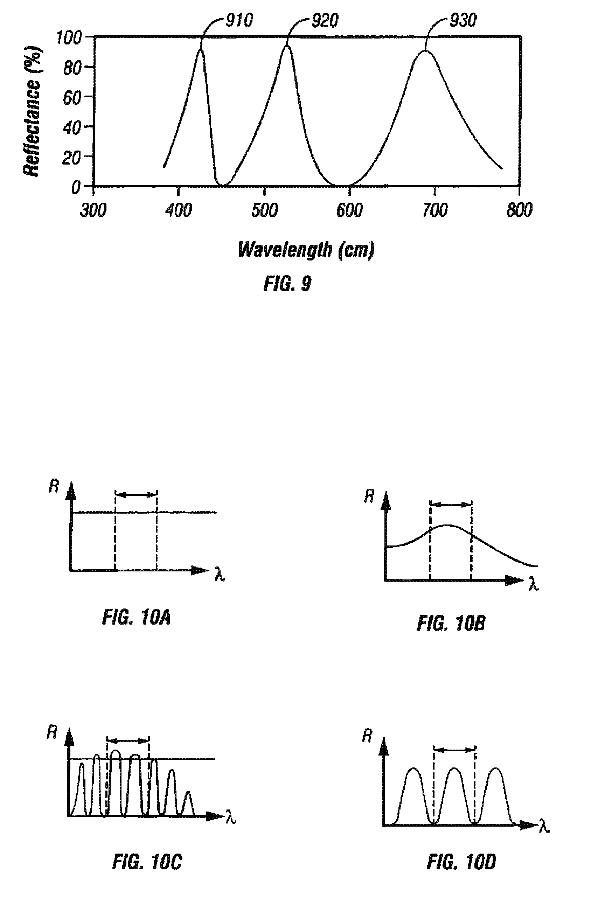

Figure 9 is a graph of an exemplary reflectance spectrum from a modulator element 1110 having a gap distance d₀ approximately equal to one micron. In this embodiment, the amount of light reflected from the modulator element 1110 is approximately 20-25% of the incoming light. In the graph of Figure 9, the horizontal axis indicates the wavelengths of light that are reflected from the exemplary modulator element 1110 and the vertical axis indicates the percent reflectance from the exemplary modulator element 1110. As illustrated in the graph of Figure 9, the reflectance spectrum of the modulator element 1110 includes three reflectivity peaks at about 430 nanometer, 525 nanometers, and 685 nanometers. Thus, the modulator element 1110 is said to have a reflectance spectrum including three reflectivity lines, or simply "lines," where a line is a peak in reflectivity. In particular, the reflectance spectrum illustrated in Figure 9 includes a first line 910, a second line 920, and a third line 930. In other embodiments, the gap between the fixed and moveable surface of the modulator element 1110 may be adjusted to produce more or less reflectivity lines. For example, in certain embodiments the selected range of wavelengths comprises a range of colors, thus producing multiple reflectivity lines associated with the range of colors. In certain embodiments, the selected range of wavelengths comprises two or more colors so that the reflectivity spectrum of the modulator element includes at least one reflectivity line associated with each of the two or more colors. In certain embodiments, the selected range of wavelengths comprises a selected color of light (e.g., red, green, or blue light). In certain embodiments, the at least one wavelength comprises first-order light, while in other embodiments, the at least one wavelength comprises higher-order (e.g., second-, third-, fourth-, or fifth-order) light. In one embodiment, at the higher order colors, e.g., 6^{th} order, 3-6 reflectance peaks can appear in the visible spectra simultaneously. Figures 10A-10D are graphs of exemplary reflectance spectrum from modulator elements having varying gaps between their respective reflective and semi-reflective surfaces. Figures 10A-10D each illustrate the reflectance (R), shown on the vertical axis, as a function of wavelength (λ), shown on the horizontal axis. As indicated in Figure 10A-10D, by adjusting the gap of the modulator element, the reflectance spectrum of the modulator element may be adjusted to include more than one line and the peak reflectivity wavelength of the one or more lines may also be adjusted.

The dashed lines in Figures 10A-10D denote a selected range of wavelengths that may be filtered by a color filter, for example. In certain embodiments, the selected range of wavelengths comprises a generally broadband wavelength region (e.g., white light), as schematically illustrated by Figure 10A. In certain embodiments, the selected range of wavelengths comprises a broadband wavelength region with a single line peaked at a selected wavelength (e.g., first-order red or first-order green), as schematically illustrated by Figure 10B. In certain embodiments, the selected range of wavelengths comprises a broadband wavelength region comprising a plurality of lines corresponding to different colors, as schematically illustrated by Figure 10C. In certain embodiments, the selected range of wavelengths comprises a wavelength region with a plurality of lines corresponding to colors of various orders, as schematically illustrated by Figure 10D. Other selected ranges of wavelengths are compatible with embodiments described herein.

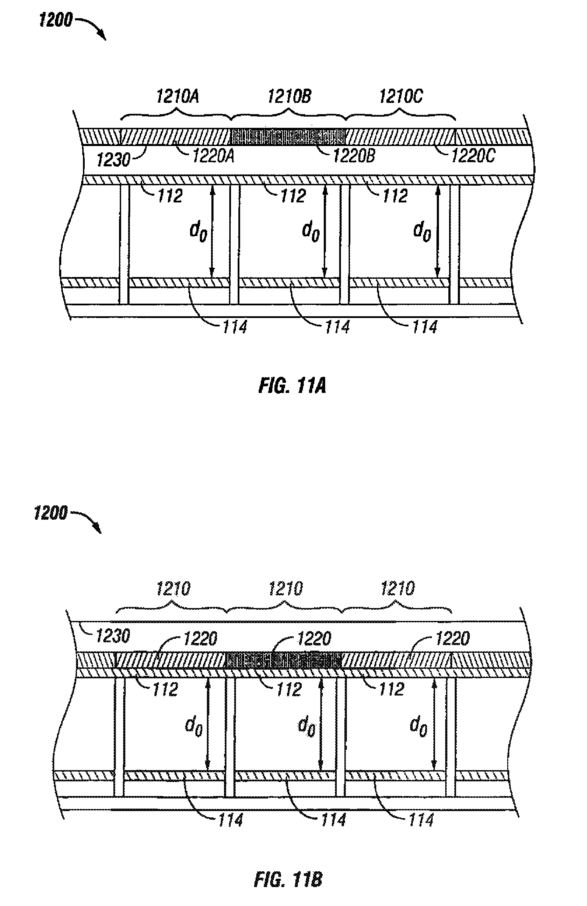

Figures 11A and 11B schematically illustrate exemplary embodiments of a display device 1200 comprising an array of interferometric modulator elements 1210 and an array of color filters 1220. Figure 11A illustrates three modulator elements 1210A, 1210B, and 1210C and three color filters 1220A, 1220B, and 1220C. In the embodiment of Figures 11A and 11B, each modulator element 1210 is individually addressable so as to be switched between a first state in which the modulator element 1210 is substantially reflective to at least one wavelength and a second state in which the modulator element 1210 is substantially non-reflective to the at least one wavelength. In the embodiment schematically illustrated by Figures 11A and 11B, each of the modulator elements 1210 has the same gap distance d₀ such that each modulator element 1210 switches the same at least one wavelength as do the other modulator elements 1210.

Each color filter 1220 is positioned such that light reflected from a corresponding modulator element 1210 propagates through the corresponding color filter 1220. In the embodiment schematically illustrated by Figure 11A, the color filters 1220 are positioned outside an outer surface 1230 of the array of interferometric modulator elements 1210. In the embodiment schematically illustrated by Figure 11B, the color filters 1220 are positioned within the outer surface 1230 and are integral with the array of interferometric modulator elements 1210.

Each color filter 1220 has a characteristic transmittance spectrum in which a selected range of wavelengths is substantially transmitted through the color filter 1220 while other wavelengths are substantially not transmitted (e.g., either reflected or absorbed) by the color filter 1220. In certain embodiments, the array of color filters 1220 comprises three subsets of the color filters 1220. Each color filter 1220 of the first subset has a first transmittance spectrum, each color filter 1220 of the second subset has a second transmittance spectrum, and each color filter 1220 of the third subset has a third transmittance spectrum. In certain embodiments, the first, second, and third subsets of the color filters 1220 have transmittance spectra corresponding to substantial transmittance of red, green, and blue light, respectively. In certain other embodiments, the first, second, and third subsets of the color filters 1220 have transmittance spectra corresponding to substantial transmittance of cyan, magenta, and yellow light, respectively. Accordingly, by placing the color filters 1220 with different transmittance spectrums on the modulator elements 1210, modulator elements 1210 having the same gap distance may have different reflectance spectrums. Thus, by combining color filters 1220 corresponding to three colors (e.g., red/green/blue or cyan/magenta/yellow) with the modulator elements having substantially equal gap distances (e.g., the modulator elements schematically illustrated by Figures 8, 11A, and 11B), certain such embodiments advantageously provide reflectivity spectrums including three highly saturated color lines without patterning the structure of the interferometric modulator elements. In certain such embodiments, because the gap of each modulator element is substantially the same, common voltage levels may be used to activate and deactivate selected modulator elements. Accordingly, voltage matching among the modulator elements is simplified.

In certain embodiments, color filters 1220 are combined with two or more sets of modulator elements having different gap distances (e.g., such as the modulator elements schematically illustrated by Figure 7), wherein each set of modulator elements reflects a different range of wavelengths. In certain such embodiments, the color filters 1220 serve to tailor the reflectance spectra of the modulator element/color filter combination (e.g., by removing unwanted tails or lines from the resultant reflectance spectrum). For example, in embodiments in which a set of modulator elements each has a reflective "on" state which substantially reflects a range of wavelengths corresponding to red light but is substantially non-reflective of other wavelengths, a color filter having a transmittance spectra with a more narrow range of transmitted wavelengths of red light can result in a more deeply saturated red color from the reflective "on" state of the modulator element. In certain embodiments, the color filter has a transmittance of less than 100% of the wavelengths which are substantially transmitted by the color filter. In certain such embodiments, the decrease in the overall display brightness due to the less-than-100% transmittance of the color filter is acceptable to generate the deeply saturated color.

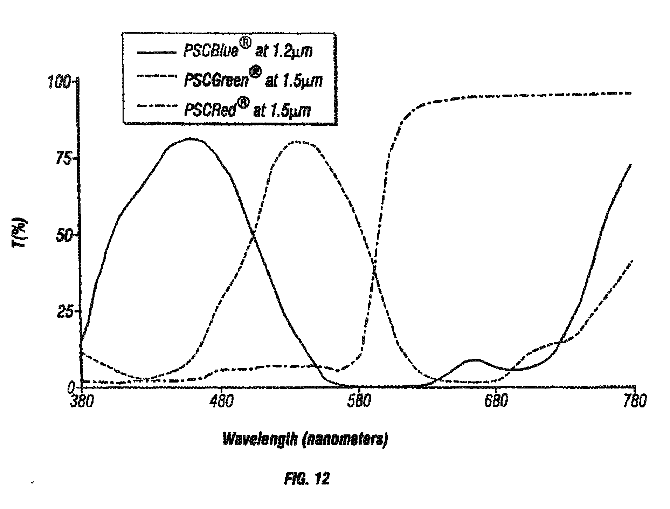

Figure 12 is a graph of transmittance spectra for a set of three exemplary color filter materials compatible with embodiments described herein. The exemplary color filter materials of Figure 12 are pigmented photosensitive color filter resins available from Brewer Science Specialty Materials of Rolla, Missouri. The solid line of Figure 12 corresponds to the transmission spectrum of a 1.2-micron thick film of PSCBlue®, the dashed line of Figure 12 corresponds to the transmission spectrum of a 1.5-micron thick film of PSCGreen®, and the dash-dot line of Figure 12 corresponds to the transmission spectrum of a 1.5-micron thick film of PSCRed®. Any type of color filter know in the art, such as a pigment-based or interference-based multilayer dielectric filter, for example, is compatible with embodiments described herein.

The thicknesses of the color filter materials arc selected to provide the desired transmission. When used with transmissive displays (e.g., liquid-crystal displays) in which a backlight source is used to produce light which is transmitted through the display element, the light propagates through the color filter material only once. When used with reflective displays (e.g., reflective interferometric displays), the light propagates through the color filter material twice: once when incident on the modulator element and once when propagating away from the modulator element. Thus, the thickness of a color filter material for a reflective display is typically approximately one-half the thickness of the color filter material when used with a transmissive display. Any type of color filter know in the art, such as a pigment-based or interference-based multilayer dielectric filter, for example, is compatible with embodiments described herein.

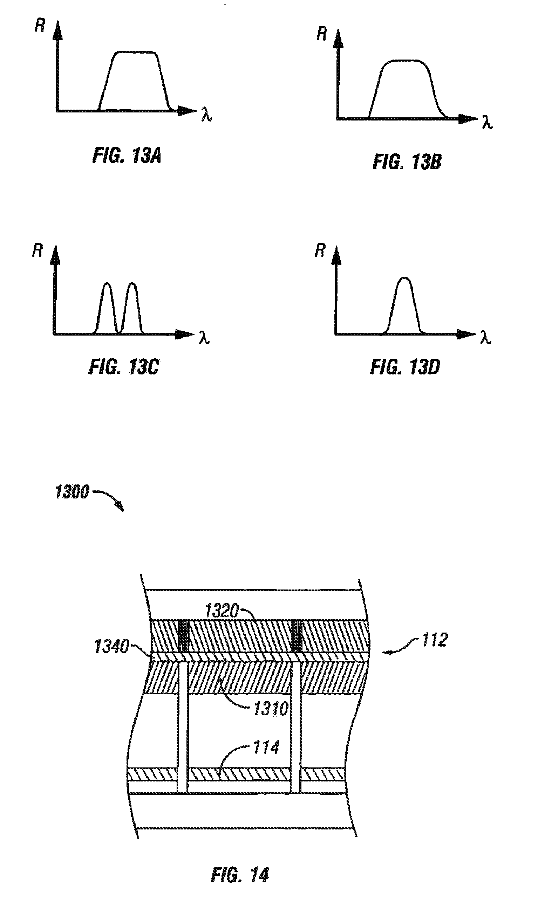

The dashed lines in Figures 10A-10D schematically illustrate a range of wavelengths substantially transmitted by a selected color filter. Figures 13A-13D are graphs of the reflectance spectra resulting from the combination of this selected color filter with the modulator elements 1210 corresponding to Figures 10A-10D. The resultant reflectance spectrum from the combination of the modulator elements 1210 corresponding to the reflectance spectrums illustrated in Figures 10A-10D and this selected color filter corresponds to a convolution of the reflectance spectrum of the modulator elements 1210 and the transmittance spectrum of the color filter. The bandpass characteristic of the selected color filter allows the modulator elements 1210 to be used as separate color contributions to the pixels of the display device.

With reference to Figures 11A and 11B, each of the modulator elements 1210 may have a common gap that is sized so that the reflectance spectrum of the modulator elements 1210 includes three distinct reflectance lines, such as is illustrated in Figures 9 and 10D, for example. In one embodiment, each of these three lines corresponds with red, green, or blue wavelengths. Accordingly, without the color filters 1220 the modulator elements 1210 would each have reflectance spectra including the three reflectance lines and the modulator elements 1210 would each reflect white light when in an "on" state. However, with the addition of the color filters 1220, the modulator elements 1210 may be altered to vary their reflectance spectrums. For example, each of the color filters 1220 may be selected to transmit only a certain range of wavelengths, such as red, green, or blue wavelengths. In particular, color filter 1220A may be selected to transmit only a range of red wavelengths, color filter 1220B may be selected to transmit only a range of green wavelengths, and color filter 1220A may be selected to transmit only a range of blue wavelengths. Accordingly, with the addition of the color filters 1220A-1220C, the modulator elements 1210 each provide different reflectance spectrums. In particular, modulator element 1210A has a single reflectance line at the range of blue selected by the color filter 1220A, modulator element 1210B has a single reflectance line at the range of green selected by the color filter 1220B, and modulator element 1210C has a single reflectance line at the range of red selected by the color filter 1220C.

In one embodiment, each modulator element includes a single color filter having a selected transmittance spectrum. In another embodiment, multiple modulator elements share a single color filter, such that the output of the multiple modulator elements are each filtered in the same way. In another embodiment, a single modulator element includes multiple color filters.

Figure 14 schematically illustrates an interferometric modulator element 1300 compatible with embodiments described herein. In the embodiment of Figure 14, the modular element 1300 comprises a fixed layer 112 and a movable layer 114. In this embodiment, the fixed layer 112 includes a reflecting surface on a layer that forms a partial reflector 1340. A dielectric layer 1310 is formed over this partial reflector 1340. In one embodiment, the partial reflector 1340 comprises a thin layer of chromium and the dielectric layer 1310 comprises silicon dioxide. In other embodiments, the partial reflector 1340 and dielectric layer 1310 may comprise any other suitable materials.

In certain embodiments, the materials and dimensions chosen for the dielectric layer 1310 vary the optical path length of the light within the modulator element 1300 and, accordingly, adjust the reflectance spectrum of the modulator element 1300. Various materials and thicknesses of the dielectric layer 1310 are compatible with embodiments described herein. As described in further detail below, an optical path length of the modulator element 1300 may be adjusted by changing the thickness of the air gap. Alternatively, the optical path length may be altered by changing the thickness or material of the dielectric layer 1310.

In one embodiment, the dielectric layer of the modulator element is sized so that when the modulator is in the closed position, light incident on the modulator element undergoes destructive interference and a viewer sees the modulator element as black. In such embodiments, the dielectric layer thickness may be about 300 to 700 Angstroms in order to provide the proper destructive interference when the modulator element is in the closed position.

In general, the power to switch a modulator element between two states depends in part on the capacitance between the electrically conductive portions associated with the fixed and movable layers 112, 114. Thus, by decreasing the gap distance, the capacitance between these surfaces is reduced, the switching power may also be reduced, and the total power consumption of a display comprising one or more modulator elements may be reduced. In the embodiment of Figure 14, the dielectric layer 1310 is sized larger than 700 Angstroms so that the air gap may be decreased while maintaining the desired optical path length for the modulator element to causes destructive interference of visible light when in the closed state. Thus, with a smaller air gap, the power consumed by the modulator element may be decreased.

In the embodiment of Figure 14, the dielectric layer 1310 has a thickness of about 2200 to 2500 Angstroms, which may adjust the reflectance spectrum of the modulator element 1300 when in the closed state to be in a range of wavelengths between first-order red light and second-order blue light. This range of wavelengths is not a true black, because it includes the tails of the first-order red light and the second-order blue light, resulting in a "deep purple" color. This deep purple may sufficiently resemble black to be used as a black state of a pixel. However, in certain embodiments, as schematically illustrated by Figure 14, the modulator element 1300 includes a color filter 1320 having a transmittance spectrum that does not transmit the tails of the first-order red light and the second-order blue light. Such embodiments provide a non-reflective closed state of the modulator element 1300 which more closely approximates true black. The color filter 1320 may further be selected to transmit only a selected wavelength range when the modulator element 1300 is in the open state. The modulator element 1300 may also provide lower capacitance, and thus consume less power, than a similar modulator element 1300 having a thinner dielectric.

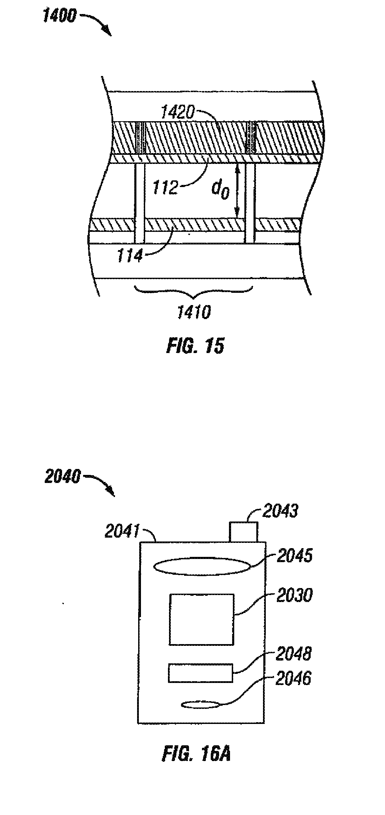

Figure 15 schematically illustrates a portion of another embodiment of a display device 1400 including an array of interferometric modulator elements 1410 compatible with embodiments described herein. In this embodiment, the gap distance when the modulator element is in the reflective "on" state is less than the gap distance when the modulator element is in the non-reflective "off" state. The modulator element 1400 includes a dielectric layer that is thin enough to frustrate interference effects between the partially reflective and fully reflective layers and to therefore reflect substantially all wavelengths of light with equal intensity, when the modulator element is in the "on" state. In one embodiment, the dielectric thickness is about 100 Angstroms. In another embodiment, the dielectric thickness is in the range of about 50 to 200 Angstroms.

In one embodiment, a gap distance d₀ is set sufficiently small so that in the reflective "on" state the modulator element 1400 provides approximately 100% reflectance of visible light, which may be significantly more reflectance than from embodiments with larger gap distances. Accordingly, certain embodiments of the display device 1400 may provide a black-and-white display with improved reflectance. Color filters 1420 may be used to tune the color spectrum of the modulator elements 1410 in the same manner as described above.

In the embodiment of Figure 15, the gap distance in the non-reflective "off" state is larger than do and is selected to not reflect a broad range of wavelengths. In particular, the gap distance is such that light undergoes destructive interference between the fixed and movable surfaces of the modulator elements 1410, causing substantially no light to reflect from the modulator element 1410 when in the "off" state. In one embodiment, the gap distance in the "off" state is in the range of about 500 to 1200 Angstrom.

Certain embodiments described herein advantageously provide highly saturated colors using a single gap distance for substantially all of the modulator elements of the interferometric modulator array. Certain embodiments described herein advantageously do not require special patterning or masking of the reflective layer in modulator elements configured to have reflectivity lines in the red wavelengths. Certain embodiments advantageously provide a sufficiently large gap distance to be tuned to eliminate unwanted portions of the visible spectrum. Certain embodiments advantageously provide a sufficiently small dielectric thickness to reflect approximately 100% of a broad range of visible wavelengths. Certain embodiments advantageously provide a low-capacitance interferomatric modulator structure.

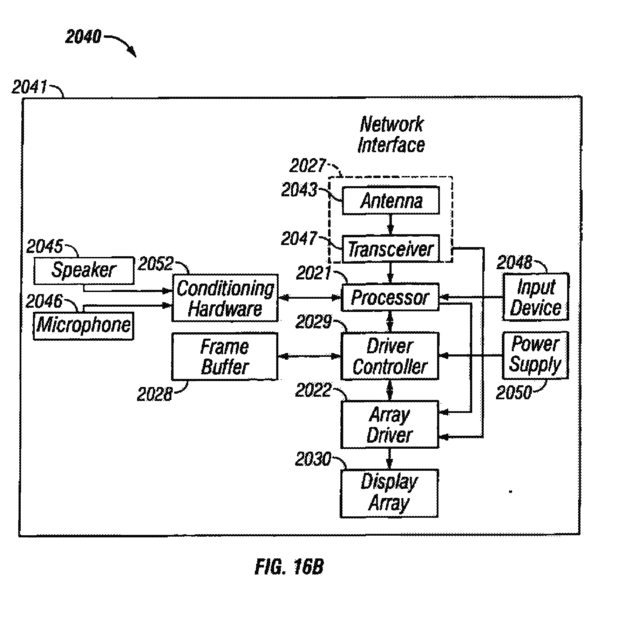

Figures 16A and 16B are system block diagrams illustrating an embodiment of a display device 2040. The display device 2040 can be, for example, a cellular or mobile telephone. However, the same components of display device 2040 or slight variations thereof are also illustrative of various types of display devices such as televisions and portable media players.

The display device 2040 includes a housing 2041, a display 2030, an antenna 2043, a speaker 2045, an input device 2048, and a microphone 2046. The housing 2041 is generally formed from any of a variety of manufacturing processes as are well known to those of skill in the art, including injection molding, and vacuum forming. In addition, the housing 2041 may be made from any of a variety of materials, including but not limited to plastic, metal, glass, rubber, and ceramic, or a combination thereof. In one embodiment the housing 2041 includes removable portions (not shown) that may be interchanged with other removable portions of different color, or containing different logos, pictures, or symbols.

The display 2030 of exemplary display device 2040 may be any of a variety of displays, including a bi-stable display, as described herein. In other embodiments, the display 2030 includes a flat-panel display, such as plasma, EL, OLED, STN LCD, or TFT LCD as described above, or a non-flat-panel display, such as a CRT or other tube device, as is well known to those of skill in the art. However, for purposes of describing the present embodiment, the display 2030 includes an interferometric modulator display, as described herein.

The components of one embodiment of exemplary display device 2040 are schematically illustrated in Figure 16B. The illustrated exemplary display device 2040 includes a housing 2041 and can include additional components at least partially enclosed therein. For example, in one embodiment, the exemplary display device 2040 includes a network interface 2027 that includes an antenna 2043 which is coupled to a transceiver 2047. The transceiver 2047 is connected to the processor 2021, which is connected to conditioning hardware 2052. The conditioning hardware 2052 may be configured to condition a signal (e.g. filter a signal). The conditioning hardware 2052 is connected to a speaker 2045 and a microphone 2046. The processor 2021 is also connected to an input device 2048 and a driver controller 2029. The driver controller 2029 is coupled to a frame buffer 2028 and to the array driver 2022, which in turn is coupled to a display array 2030. A power supply 2050 provides power to all components as required by the particular exemplary display device 2040 design.

The network interface 2027 includes the antenna 2043 and the transceiver 2047 so that the exemplary display device 2040 can communicate with one or more devices over a network. In one embodiment the network interface 2027 may also have some processing capabilities to relieve requirements of the processor 2021. The antenna 2043 is any antenna known to those of skill in the art for transmitting and receiving signals. In one embodiment, the antenna transmits and receives RF signals according to the IEEE 802.11 standard, including IEEE 802.11(a), (b), or (g). In another embodiment, the antenna transmits and receives RF signals according to the BLUETOOTH standard. In the case of a cellular telephone, the antenna is designed to receive CDMA, GSM, AMPS or other known signals that are used to communicate within a wireless cell phone network. The transceiver 2047 pre-processes the signals received from the antenna 2043 so that they may be received by and further manipulated by the processor 202 1. The transceiver 2047 also processes signals received from the processor 2021 so that they may be transmitted from the exemplary display device 2040 via the antenna 2043.

In an alternative embodiment, the transceiver 2047 can be replaced by a receiver. In yet another alternative embodiment, network interface 2027 can be replaced by an image source, which can store or generate image data to be sent to the processor 2021. For example, the image source can be a digital video disc (DVD) or a hard-disc drive that contains image data, or a software module that generates image data.

Processor 2021 generally controls the overall operation of the exemplary display device 2040. The processor 2021 receives data, such as compressed image data from the network interface 2027 or an image source, and processes the data into raw image data or into a format that is readily processed into raw image data. The processor 2021 then sends the processed data to the driver controller 2029 or to frame buffer 2028 for storage. Raw data typically refers to the information that identifies the image characteristics at each location within an image. For example, such image characteristics can include color, saturation, and gray-scale level.

In one embodiment, the processor 2021 includes a microcontroller, CPU, or logic unit to control operation of the exemplary display device 2040. Conditioning hardware 2052 generally includes amplifiers and filters for transmitting signals to the speaker 2045, and for receiving signals from the microphone 2046. Conditioning hardware 2052 may be discrete components within the exemplary display device 2040, or may be incorporated within the processor 2021 or other components,

The driver controller 2029 takes the raw image data generated by the processor 2021 either directly from the processor 2021 or from the frame buffer 2028 and reformats the raw image data appropriately for high speed transmission to the array driver 2022. Specifically, the driver controller 2029 reformats the raw image data into a data flow having a raster-like format, such that it has a time order suitable for scanning across the display array 2030. Then the driver controller 2029 sends the formatted information to the array driver 2022. Although a driver controller 2029, such as a LCD controller, is often associated with the system processor 2021 as a stand-alone Integrated Circuit (IC), such controllers may be implemented in many ways. They may be embedded in the processor 2021 as hardware, embedded in the processor 2021 as software, or fully integrated in hardware with the array driver 2022.

Typically, the array driver 2022 receives the formatted information from the driver controller 2029 and reformats the video data into a parallel set of waveforms that are applied many times per second to the hundreds and sometimes thousands of leads coming from the display's x-y matrix of pixels.

In one embodiment, the driver controller 2029, array driver 2022, and display array 2030 are appropriate for any of the types of displays described herein. For example, in one embodiment, driver controller 2029 is a conventional display controller or a bi-stable display controller (e.g., an interferometric modulator controller). In another embodiment, array driver 2022 is a conventional driver or a bi-stable display driver (e.g., an interferometric modulator display). In one embodiment, a driver controller 2029 is integrated with the array driver 2022. Such an embodiment is common in highly integrated systems such as cellular phones, watches, and other small area displays. In yet another embodiment, display array 2030 is a typical display array or a bi-stable display array (e.g., a display including an array of interferometric modulators).

The input device 2048 allows a user to control the operation of the exemplary display device 2040. In one embodiment, input device 2048 includes a keypad, such as a QWERTY keyboard or a telephone keypad, a button, a switch, a touch-sensitive screen, a pressure- or heat-sensitive membrane. In one embodiment, the microphone 2046 is an input device for the exemplary display device 2040. When the microphone 2046 is used to input data to the device, voice commands may be provided by a user for controlling operations of the exemplary display device 2040.

Power supply 2050 can include a variety of energy storage devices as are well known in the art. For example, in one embodiment, power supply 2050 is a rechargeable battery, such as a nickel-cadmium battery or a lithium ion battery. In another embodiment, power supply 2050 is a renewable energy source, a capacitor, or a solar cell, including a plastic solar cell, and solar-cell paint. In another embodiment, power supply 2050 is configured to receive power from a wall outlet.

In some implementations control programmability resides, as described above, in a driver controller which can be located in several places in the electronic display system. In some cases control programmability resides in the array driver 2022. Those of skill in the art will recognize that the above-described optimization may be implemented in any number of hardware and/or software components and in various configurations.

Various embodiments of the invention have been described above; however, other embodiments are possible. For example, in other embodiments, other types of light-modulating elements other than interferometric modulators (e.g., other types of MEMS or non-MEMs, reflective or non-reflective structures) may be used.

Accordingly, although this invention has been described with reference to specific embodiments, the descriptions are intended to be illustrative of the invention and are not intended to be limiting. Various modifications and applications may occur to those skilled in the art without departing from the true spirit and scope of the invention.
1. A device comprising: means for modulating light configured such that light reflected from said modulating means has a wavelength spectrum including multiple lines; and means for filtering only a desired one of the multiple lines for viewing by a human eye.
2. The device of Clause 1, wherein said modulating means comprises: means for partially reflecting light; and means for reflecting light, wherein the means for partially reflecting and the means for reflecting are configured to provide a reflectivity spectrum including said multiple lines.
3. The device of Clause 1, wherein said modulating means comprises a plurality of display elements, each of the display elements comprising a fixed surface and a moveable surface configured to define a cavity therebetween that is sufficiently large so that light reflected from each of the display elements has said wavelength spectrum including multiple lines.
4. The device of Clause 1 or 3, wherein said filtering means comprises a color filter associated with at least one of the display elements, wherein the color filter is configured to allow a range of wavelengths to pass through the color filter, the device being configured so that a user views the light that passes through the color filter.
5. The device of Clause 4, wherein the fixed surface is partially reflective and the moveable surface is reflective.
6. The device of Clause 4, wherein the distance between the fixed and moveable surfaces are substantially equal in each of the plurality of display elements when the display elements are in an open state.
7. The device of Clause 3, wherein the distance between the fixed and moveable surfaces of the display elements is sufficiently large so that light incident on each of the display elements has reflectivity lines in red, green, and blue visible light wavelengths.
8. The device of Clause 7, wherein said filtering means comprises a plurality of color filters, wherein a first group of the color filters is configured to transmit wavelengths of visible light in only the red visible light wavelengths, a second group of the color filters is configured to transmit wavelengths of visible light only in the green visible light wavelengths, and a third group of the color filters is configured to transmit wavelengths of visible light only in the blue visible light wavelengths.
9. The device of Clause 3, wherein the distance between the fixed and moveable surfaces of the display elements is sufficiently large so that visible light incident on each of the display elements has reflectivity lines in the ranges of about 625 to 740 nanometers, about 500 to 565 nanometers, and about 440 to 485 nanometers.
10. The device of Clause 9, wherein said filtering means comprises a plurality of color filters, wherein a first group of the color filters is configured to transmit wavelengths of visible light only in the range of about 625 to 740 nanometers, a second group of the color filters is configured to transmit wavelengths of visible light only in the range of about 500 to 565 nanometers, and a third group of the color filters is configured to transmit wavelengths of visible light only in the range of about 440 to 485 nanometers.
11. The device of Clauses 1, 2, or 3, wherein the filtering means comprises a plurality of color filters, wherein a first group of the color filters is configured to transmit wavelengths of light only in the range of about 610 to 630 nanometers, a second group of the color filters is configured to transmit wavelengths of light only in the range of about 530 to 550 nanometers, and a third group of the color filters is configured to transmit wavelengths of light only in the range of about 440 to 460 nanometers.
12. The device of Clause 4, wherein the distance between the fixed and moveable surface of the display elements is in the range of about 10,000 to 15,000 Angstroms.
13. The device of Clause 4, wherein the reflective surface of each of the plurality of display elements comprises the same materials.
14. The device of Clause 4, wherein the fixed and movable surfaces are separated by a gap greater than about 5000 Angstrom.
15. A method of manufacturing a device comprising: fabricating an array of display elements, each of the display elements comprising a fixed surface and a moveable surface to define a cavity therebetween that is sufficiently large so that light reflected from each of the display elements has a reflectivity spectrum including multiple lines; fabricating a color filter that is configured to allow a range of wavelengths to pass through the color filter; and disposing the color filter with respect to at least one of the display elements so that a user views the light that passes through the color filter.
16. The method of Clause 15, wherein the distance between the fixed and moveable surfaces of the display elements is sufficiently large so that light incident on each of the display elements has reflectivity lines in each of the blue, green, and red wavelengths.
17. A device manufactured by the process of any of Clauses 15 or 16.
18. A device comprising: means for interferometrically modulating light wherein in a first state, interference of a large range of wavelengths of visible light is frustrated so that visible light is reflected, and wherein in a second state, destructive interference substantially inhibits reflection of visible light; and means for switching said modulating means between said first and second states.
19. The device of Clause 18, wherein said modulating means comprises: a partially reflective surface; a reflective surface, said partially reflective surface and said reflective surfaces being movable with respect to each other to provide open and closed states; a dielectric layer disposed between the partially reflective and reflective surfaces; and a gap defined between the partially reflective surface and the reflective surface,wherein a gap distance is the distance between the partially reflective surface and the reflective surface, wherein a thickness of the dielectric layer is sufficiently small such in the closed state, interference of a large range of wavelengths of visible light is frustrated and visible light is reflected, and wherein in the open state, the gap distance is sufficiently large to cause destructive interference to substantially inhibit reflection of visible light.
20. The device of Clause 18 or 19, wherein the switching means comprises at least one electrode.
21. The device of Clause 19, wherein the dielectric thickness is less than about 100 Angstroms.
22. The device of Clause 19, further comprising a color filter.
23. The device of Clause 22, wherein the color filter is configured to preferentially transmit light within a range of wavelengths, wherein the range of wavelengths is selected to include at least one of the following: red wavelengths, green wavelengths, and blue wavelengths.
24. The device of Clause 19, further comprising a band pass filter that transmits white light.
25. The device of Clause 19, wherein the modulator is configured so that light incident on the modulator when the gap distance is in the range of about 500 to 1200 Angstroms undergoes destructive interference.
26. A method of manufacturing an interferometric modulator, the method comprising: fabricating a partially reflective surface; fabricating a reflective surface, wherein a gap distance is defined as a distance between the partially reflective surface and the reflective surface; positioning a dielectric layer between the partially reflective and reflective surfaces, wherein a thickness of the dielectric layer is sufficiently small such that when the modulator is in a closed state interference of a large range of wavelengths of visible light is frustrated so that the modulator reflects visible light, and when the modulator is in an open state the gap distance is sufficiently large to cause destructive interference, such that the modulator substantially inhibits reflection of visible light.
27. A device fabricated by the process of Clause 26.
28. A device comprising: means for modulating light, said modulating means having a reflectance spectrum that includes a reflectivity line centered around first order green and extending to cover at least a portion of first order blue and first order red; and means for color filtering disposed to receive light from said modulating means.
29. The device of Clause 28, wherein said modulating means comprises: a plurality of interferometric modulators each comprising a partially reflective surface comprising a transparent conductor layer and a partially reflective layer; a reflective surface; a dielectric layer disposed between the partially reflective and reflective surfaces; and a gap defined between the partially reflective surface and the reflective surface, wherein a size of the gap is selected so that each interferometric modulator has a reflectance spectrum that includes a reflectivity line centered around first order green and extending to cover at least a portion of first order blue and first order red.
30. The device of Clauses 28 or 29, wherein said color filtering means comprises at least one color filter disposed to receive light reflected from the reflective surface such that the received light is transmitted through the filter toward a viewer.
31. The device of Clause 30, wherein the dielectric layer has a thickness in the range of about 300 to 1000 Angstroms and the gap size is in the range of about 1400 to 2000 Angstroms.
32. The device of Clause 30, wherein the at least one color filter comprises a red color filter, a blue color filter or a green color filter.
33. The device of Clause 30, wherein said at least one color filter comprises a plurality of color filters, each of the color filters being associated with at least one of the interferometric modulators.
34. The device of Clause 30, wherein the at least one color filter includes a green color filter and a red color filter, wherein the green color filter is less absorptive of light than the red color filter.
35. The device of Clause 30, wherein the at least one color filter includes a green color filter and a blue color filter, wherein the green color filter is less absorptive of light than the blue color filter.
36. The device of Clause 30, wherein the reflectivity line is centered at about 520 nm.
37. The device of Clause 30, wherein each interferometric modulator has a reflectance spectrum that reflects at least about 40% of light having wavelengths of about 450 nanometers, 520 nanometers, and 620 nanometers.
38. The device of Clause 30, wherein the gap size of each interferometric modulator is about 2000 Angstroms.
39. A method of manufacturing a display, the method comprising: fabricating a plurality of interferometric modulators each comprising a partially reflective surface, a reflective surface, a dielectric layer disposed between the partially reflective and reflective surfaces, and a gap defined between the partially reflective surface and the reflective surface, wherein a size of the gap is selected so that each interferometric modulator has a reflectance spectrum that includes a reflectivity line centered around first order green and extending to cover at least a portion of first order blue and first order red; and fabricating at least one color filter so that the color filter transmits light within a range of wavelengths selected to include at least one of the following: red wavelengths, green wavelengths, and blue wavelengths; and disposing the color filter to receive light reflected from the reflective surface such that the received light is transmitted through the filter toward a viewer.
40. A device manufactured by the process of Clause 39.
41. A device comprising: means for modulating light, said modulating means having first and second states, wherein in said second state light is reflected that has spectral lines at around first order red and second order blue wavelengths of visible light; and means for switching said modulating means between said first and second states.
42. The device of Clause 41, wherein said modulating means comprises: a reflective surface; a partially reflective surface; and a dielectric layer disposed between the partially reflective and reflective surfaces,wherein a thickness of the dielectric layer is sufficiently large to cause reflectivity lines at around first order red and second order blue wavelengths of visible light when the interferometric modulator is in an actuated state.
43. The device of Clauses 41 or 42, wherein said switching means comprises at least one electrode.
44. The device of Clause 42, further comprising a filter structure configured to transmit wavelengths of visible light that are within the ranges of about 420 to 650 nanometers and block said first order blue and second order red reflectivity lines such that when the interferometric modulator is in an actuated state, the partially reflective surface of the interferometric modulator appears substantially black to a human eye.
45. The device of Clause 41, wherein in said second state spectral lines exist at about 370 nanometers and about 730 nanometers.
46. The device of Clause 45, wherein said modulating means comprises: a reflective surface; a partially reflective surface, said reflecting surface and said partially reflecting surface movable with respect to each other to provide an open state and a closed state for said interferometric modulator; and a dielectric layer disposed between the partially reflective and reflective surfaces, the thickness of the dielectric layer being sufficiently large to cause reflectivity lines at about 370 nanometers and about 730 nanometers when the modulator is in the closed state.
47. The device of Clause 46, further comprising a filter structure configured to transmit wavelengths of visible light that are within the ranges of about 420 to 650 nanometers and block said reflectivity lines at about 370 nanometers and about 730 nanometers such that when the interferometric modulator is in an actuated state, the partially reflective surface of the interferometric modulator appears substantially black to a human eye.
48. The device of Clause 47, wherein the filter structure is further configured to produce at least one of red color light, green color light, and blue color light by preferentially transmitting red, green, and blue wavelengths respectively.
49. The device of Clause 47, wherein the filter is further configured to transmit light within a range of wavelengths, wherein the range of wavelengths is selected to include at least one of the following: red wavelengths, green wavelengths, blue wavelengths, and white wavelengths.
50. The device of Clause 46, wherein the dielectric layer comprises an oxide film.
51. The device of Clause 46, wherein a thickness of the dielectric layer is in the range of about 2200 to 2500 Angstroms.
52. The device of Clause 46, wherein a distance between the reflective surface and the partially reflective surface is selected so that the interferometric modulator has a reflectance spectrum that includes at least three peaks in wavelengths that are visible to a human eye.
53. The method of manufacturing an interferometric modulator comprising: fabricating a partially reflective surface; fabricating a reflective surface, said reflecting surface and said partially reflecting surface movable with respect to each other to provide an open state and a closed state for said interferometric modulator; and positioning a dielectric layer between the partially reflective and reflective surfaces, the thickness of the dielectric layer being sufficiently large to cause reflectivity lines at around first order red and second order blue wavelengths of visible light when the interferometric modulator is in an closed state.
54. A device fabricated by the method of Clause 53.
55. The device of any of Clauses 1, 18, 28, and 41 further comprising: a processor that is in electrical communication with said means for modulating light, said processor being configured to process image data; a memory device in electrical communication with said processor.
56. The device as recited in Clause 55, further comprising: a first controller configured to send at least one signal to said at least one display; and a second controller configured to send at least a portion of said image data to said first controller.
57. The device as recited in Clause 56, further comprising: an image source module configured to send said image data to said processor.
58. The device as recited in Clause 57, wherein said image source module comprises at least one of a receiver, transceiver, and transmitter.
59. The device as recited in Clause 55, further comprising: an input device configured to receive input data and to communicate said input data to said processor.
60. A method of operating a display comprising: providing an array of display elements, each of the display elements comprising a fixed surface and a moveable surface configured to define a cavity therebetween that is sufficiently large so that light reflected from each of the display elements has a reflectivity spectrum including multiple lines; receiving a light on the array of display elements; filtering light reflected from each of the display elements according to a color filter disposed in an optical path of respective display elements.
61. A method of operating a display, the method comprising: receiving light from a light source so that the light at least partially passes through a partially reflective surface and reflects from a reflective surface, wherein a optical cavity is formed between the partially reflective surface and the reflective surface; setting a distance between the partially reflective surface and the reflective surface so that interference of a large range of wavelengths of visible light is frustrated and visible light is reflected from the display, resetting a distance between the partially reflective surface and the reflective surface so that light within the cavity undergoes destructive interference and substantially inhibits reflection of visible light from the display.
62. A method of operating a display comprising: reflecting light from a display comprising a switchable optical resonant cavity so that the wavelength spectrum of the reflected light includes a spectral line centered around first order green and that extends to cover at least a portion of first order blue and first order red; and color filtering the reflected light to selectively alter wavelengths of light emitted from portions of the display.
63. A method of operating a display device comprising a plurality of resonant optical cavities, said method comprising: setting at least one of said optical cavities to a state such that light reflected from the optical cavity have a spectral lines at around first order red and second order blue wavelengths of visible light; and switching the at least one optical cavity such that said at least one of said optical cavities has a different optical cavity length and a different reflectivity spectrum.

## Claims

1. An interferometric modulator comprising:
means for partially reflecting light;
means for reflecting light, the partially reflecting means and the reflecting means being movable with respect to each other to provide open and closed states; and
means for electrically insulating disposed between the partially reflective and reflective surfaces, wherein the means for electrically insulating has a thickness of at least about 700 Angstroms.

2. The interferometric modulator of Claim 1, wherein the electrically insulating means has a thickness in the range of about 2200 to 2500 Angstroms.

3. The interferometric modulator of Claim 1 or 2, wherein the electrically insolating means comprises an oxide film.

4. The interferometric modulator of Claim 1, 2, or 3, wherein the closed state produces a dark state and the open state produces a bright state.

5. The interferometric modulator of Claim 4, wherein the dark state has a reflectance spectrum that includes visible light that produces a deep purple color that resembles black, and further comprising a means for filtering light configured block visible light near the end of the visible spectrum so that the dark state more closely resembles true black.

6. The interferometric modulator of Claim 5, wherein the partially reflecting means is a partially reflective surface, or wherein the reflecting means is a reflective surface, or wherein the electrically insulating means is a dielectric layer, or wherein the light filtering means comprises at least one color filter.

7. The interferometric modulator of Claim 5 or 6, wherein the optical response of the dark state includes second-order blue light.

8. The interferometric modulator of Claim 5, 6, or 7, wherein the light filtering means is configured to block visible light at about 370 nanometers.

9. The interferometric modulator of Claim 5, 6, 7, or 8, wherein the light filtering means is configured to transmit visible light within the range of about 420 to 650 nanometers.

10. A method of manufacturing an interferometric modulator, the method comprising:
fabricating a partially reflective surface;
fabricating a reflective surface, wherein the partially reflective surface and the reflective surface are movable with respect to each other to provide open and closed states; and
positioning a dielectric layer between the partially reflective surface and the reflective surface, wherein the dielectric layer has a thickness of at least about 700 Angstroms.

11. The method of Claim 10, wherein the dielectric layer has a thickness in the range of about 2200 to 2500 Angstroms.

12. The method of Claim 10 or 11, wherein the closed state produces a dark state and the open state produces a bright state, wherein the dark state has a reflectance spectrum that includes visible light that produces a deep purple color that resembles black, and wherein the method further comprises providing at least one color filter configured to block visible light near the end of the visible spectrum so that the dark state more closely resembles true black.

13. A method of operating a display, the method comprising:
receiving light from a light source so that the light at least partially passes through a partially reflective surface and reflects from a reflective surface, wherein the partially reflective surface and the reflective surface are movable with respect to each other to provide open and closed states;
setting the partially reflective surface and the reflective surface to the closed state, wherein a dielectric layer is positioned between the partially reflective surface and the reflective surface, the dielectric layer having a thickness of at least about 700 Angstroms; and
setting the partially reflective surface and the reflective surface to the open state.

14. The method of Claim 13, wherein the dielectric layer has a thickness in the range of about 2200 to 2500 Angstroms.

15. The method of Claim 13, 14, or 13, wherein the closed state produces a dark state and the open state produces a bright state, wherein the dark state has a reflectance spectrum that includes visible light that produces a deep purple color that resembles black, and wherein the method further comprises blocking, with at least one color filter, visible light near the end of the visible spectrum so that the dark state more closely resembles true black.
